# EUROPÄISCHE PATENTANMELDUNG

(11) **EP 1 386 877 A2**
(43) Veröffentlichungstag der Anmeldung: **04.02.2004**
(21) Anmeldenummer: 03016682.1
(22) Anmeldetag: 01.08.2003
(51) Int. Cl.: B66C 1/34, B25B 27/20

(54) **Aufhängung eines Lastanschlagmittels, insbesondere für Unterflaschen von Hebezeugen, Verfahren zur Montage von Sprengringen und Montagewerkzeug hierzu**

(30) Priorität: 02.08.2002 DE 10236408
(71) Anmelder: Demag Cranes & Components GmbH, 58300 Wetter (DE)
(72) Erfinder: Hecht, Joachim, 40822 Mettmann (DE); Zacharias, Karl, 58239 Schwerte (DE)
(74) Vertreter: Moser, Jörg Michael, Dipl.-Ing.

(57) **Zusammenfassung**

Die Erfindung betrifft eine Aufhängung (2) eines Lastanschlagmittels, insbesondere für Unterflaschen von Hebezeugen, mit einem mit einer Durchgangsöffnung (6) versehenen Halteelement (3), mit einem in die Durchgangsöffnung (6) einsteckbaren Schaft (4) des Lastanschlagmittels, dessen freies Schaftende (7) aus der Durchgangsöffnung (6) herausragt und mit einer Ausnehmung (10) versehen ist, in die ein Ring eingesetzt ist, über die sich das Lastanschlagmittel (1) an dem Halteelement (3) abstützt. Auch betrifft die Erfindung ein Verfahren zur Montage der Aufhängung sowie ein Montagewerkzeug hierzu.

Um eine kurzbauende Lasthaken-Aufhängung zu schaffen, die einfach zu fertigen und zu montieren ist, wird vorgeschlagen, dass der Ring als einteiliger, offener und federnder Sprengring (8) ausgebildet ist. Das Verfahren zur Montage des Sprengringes sieht vor, dass der Sprengring (8) zunächst mit einem konusförmigen Werkzeug auf den Außendurchmesser des Schaftendes (7) aufgeweitet wird, anschließend das Werkzeug auf das Schaftende (7) aufgesetzt wird und der Sprengring (8) von dem Werkzeug mittels einer Treibhülse (20) auf das Schaftende (7) bis auf die Höhe der Ausnehmung (10) geschoben wird und der Sprengring (8) durch seine Vorspannung in Eingriff mit der Ausnehmung (10) kommt.

## Beschreibung

Die Erfindung betrifft eine Aufhängung eines Lastanschlagmittels, insbesondere für Unterflaschen von Hebezeugen, mit einem mit einer Durchgangsöffnung versehenen Halteelement, mit einem in die Durchgangsöffnung einsteckbaren Schaft des Lastanschlagmittels, dessen freies Schaftende aus der Durchgangsöffnung herausragt und mit einer Ausnehmung versehen ist, in die ein Ring eingesetzt ist, über die sich das Lastanschlagmittel an dem Halteelement abstützt. Auch betrifft die Erfindung ein Verfahren zur Montage der Aufhängung sowie ein Montagewerkzeug hierzu.

Aus der deutschen Norm DIN 15 411 sind Lasthaken-Aufhängungen für Unterflaschen von Hebezeugen bekannt. Der Lasthaken weist dabei einen Schaft auf, der an einer Traverse abgestützt ist. Hierzu ist die Traverse quer zur ihrer Längsrichtung mit einer Durchgangsbohrung versehen, durch die das freie Schaftende hindurch gesteckt ist. An dem aus der Traverse heraus ragenden Ende des Schaftes ist ein Außengewinde vorgesehen, auf das eine Lasthakenmutter aufgeschraubt ist. Die Lasthakenmutter stützt sich über ein Axialkugellager auf der Traverse ab, die ihrerseits um eine horizontale Achse verschwenkbar in der Unterflasche gelagert ist. Der Kraftfluss einer am Haken hängenden Last läuft somit vom Hakenschaft über die Gewindeverbindung zur Lasthakenmutter und danach über das Axialkugellager zur Traverse. Die erforderliche Losdrehsicherung für die Lasthakenmutter wird je nach Lasthakengröße durch Verschweißen oder Verstiften von Schaft und Mutter erreicht.

Der Nachteil dieser bekannten Lasthaken-Aufhängungen besteht darin, dass diese langbauend sind und einen relativ großen Fertigungs- und Montageaufwand erfordern.

Ferner ist aus dem US-Patent 2 625 005 eine weitere Unterflasche mit einem Lasthaken bekannt, dessen Schaft an seinem oberen Ende eine umlaufende Ringnut aufweist. Diese Ringnut dient zur Aufnahme eines zweiteiligen Ringes. Über die aus der Ringnut herausragenden Bereiche des Ringes stützt sich der Lasthaken auf einem ringförmigen Abstützelement ab, durch das der Schaft des Lasthakens vor Montage des geteilten Ringes hindurch geschoben wurde. Zur Aufnahme des aus der Oberfläche des Schaftes herausragenden Teil des Ringes weist das Abstützelement eine ringförmige Anlagefläche auf, dessen Oberflächenkontur an die Außenfläche des Ringes angepasst ist. Der zweiteilige Ring ist jeweils über einen Presssitz in die Ringnut und das Abstützelement eingefügt. Das Abstützelement ist über ein Axialkugellager in einer Hülse der Unterflasche um eine vertikale Achse drehbar gelagert. Die Abstützung des Lasthaken-Schaftes über den geteilten Ring ist dort gewählt worden, um gegenüber den herkömmlicher Weise verwendeten Gewindeverbindungen eine höhere Standzeit und Sicherheit zu erlangen.

Der vorliegenden Erfindung liegt die Aufgabe zu Grunde, eine kurzbauende Lasthaken-Aufhängung zu schaffen, die einfach zu fertigen und zu montieren ist.

Die Aufgabe wird durch eine Aufhängung mit den Merkmalen des Anspruchs 1 gelöst. Die Unteransprüche 2 bis 9 enthalten vorteilhafte Ausgestaltungen der Aufhängung. Mit den Merkmalen des Anspruches 10 wird ein geeignetes Verfahren zur Montage des Sprengringes angegeben. Im Anspruch 11 wird ein zugehöriges Montagewerkzeug beschrieben, das gemäß den Merkmalen des Anspruches 12 vorteilhaft ausgestaltet ist.

Erfindungsgemäß wird bei einer Aufhängung eines Lastanschlagmittels, insbesondere für Unterflaschen von Hebezeugen, mit einem mit einer Durchgangsöffnung versehenen Halteelement, mit einem in die Durchgangsöffnung einsteckbaren Schaft des Lastanschlagmittels, dessen freies Schaftende aus der Durchgangsöffnung herausragt und mit einer Ausnehmung versehen ist, in die ein Ring eingesetzt ist, über die sich das Lastanschlagmittel an dem Halteelement abstützt, eine kurzbauende, einfach zu fertigende und zu montierende Lasthaken-Aufhängung dadurch geschaffen, dass der Ring als einteiliger, offener und federnder Sprengring ausgebildet ist. Sprengringe werden üblicherweise für die axiale Lagesicherung von Wälzlagern eingesetzt; hier erfolgt der Einsatz zur Übertragung der verhältnismäßig großen Kräfte zwischen Hakenschaft und Halteelement.

In vorteilhafter Ausgestaltung ist der Sprengring aus Federstahlrunddraht hergestellt und liegt innenseitig in der Ausnehmung und außenseitig an einem Abstützelement an, das eine Vertiefung mit einer Anlagefläche zur Aufnahme des Sprengringes aufweist.

Konstruktiv günstig ist es, dass das Abstützelement ringförmig mit einer zentralen Durchgangsbohrung ist, durch welche das Schaftende hindurch verläuft, und eine plane Fläche zur Anlage an einem Axialkugellager aufweist, das an dem Halteelement abgestützt ist.

Eine Reduzierung der zu montierenden Teile wird dadurch erreicht, dass das Abstützelement eine Kugellaufbahn für Kugeln aufweist und somit einen Kugellagerring bildet.

In einer ersten Ausführungsvariante ist die Ausnehmung als umlaufende Nut mit einem halbkreisförmigen Querschnitt ausgebildet.

Eine zweite Ausführungsvariante zeigt, dass die Ausnehmung um das Schaftende umlaufend ausgebildet ist und im Querschnitt gesehen an ihrem dem Ende des Schaftes zugewandten Ende viertelkreisförmig ist und tangential in eine Gerade übergeht, die ansteigend im Bereich des Außenoberfläche endet. Hierdurch werden die Kerbspannungen durch die Ausnehmung im Bereich des Schaftendes reduziert.

Das Lastanschlagmittel kann je nach Bedarf als Lasthaken oder Lastöse ausgebildet sein.

In bevorzugter Ausgestaltung ist das Halteelement als Traverse ausgebildet, die in der Mitte die Durchgangsöffnung trägt, an die sich gegenüberliegend zwei Achsstummel anschließen, über die das Haltelement schwenkbar in einer Unterflasche gelagert ist.

Besonders einfach ist der Sprengring zu montieren, indem der Sprengring zunächst mit einem konusförmigen Werkzeug auf den Außendurchmesser des Schaftendes aufgeweitet wird. Anschließend wird das Werkzeug auf das Schaftende aufgesetzt, der Sprengring wird von dem Werkzeug mittels einer Treibhülse auf das Schaftende bis auf die Höhe der Nut geschoben und der Sprengring durch seine Vorspannung in Eingriff mit der Ausnehmung kommt.

Die Durchführung des vorgenannten Montageverfahrens wird durch ein Montagewerkzeug vereinfacht, das ein konusförmiges Werkzeug zum Aufweiten des Sprengringes auf den Außendurchmesser des Schaftendes mit einem Konusbereich und einem angrenzenden Zylinderbereich aufweist, der einen dem Außendurchmesser des Schaftendes entsprechenden Außendurchmesser aufweist. Auch besteht das Montagewerkzeug aus einem Treibelement zum Auftreiben des Sprengringes über den Konusbereich und auf den Zylinderbereich und aus einer Treibhülse zum Auftreiben des Sprengringes von dem Zylinderbereich des in Verlängerung des Schaftes an das Schaftende angesetzten Werkzeuges auf das Schaftende und in die Ausnehmung im Schaftende.

In vorteilhafter Weise ist das Werkzeug in Aufweitrichtung gesehen mit kreuzförmig angeordneten Einschnitten versehen ist, die durch den gesamten Konusbereich und bis in den Anfang des Zylinderbereichs reichen. Das Treibwerkzeug besteht aus einem scheibenförmigen Treibkopf und angrenzenden Treibelementen, die aus kreuzförmig zueinander angeordneten Wandabschnitten gebildet sind, deren Ausrichtung zueinander so gewählt ist, dass die Treibelemente in die Einschnitte in Auftreibrichtung einführbar sind und somit der Sprengring von den Treibelementen in Richtung des Zylinderbereiches treibbar ist.

Ein Ausführungsbeispiel der Erfindung wird nachfolgend anhand einer Zeichnung beschrieben. Es zeigen:
- Figur 1: eine Aufhängung eines Lasthakens mit einer Sprengring-Verbindung,
- Figur 2: eine alternative Ausführung der Sprengring-Verbindung gemäß Figur 1,
- Figur 3: eine Ansicht eines ersten Teils eines Montagewerkzeuges für den Sprengring der erfindungsgemäßen Aufhängung und
- Figur 4: eine Ansicht eines weiteren Teils des Montagewerkzeuges.

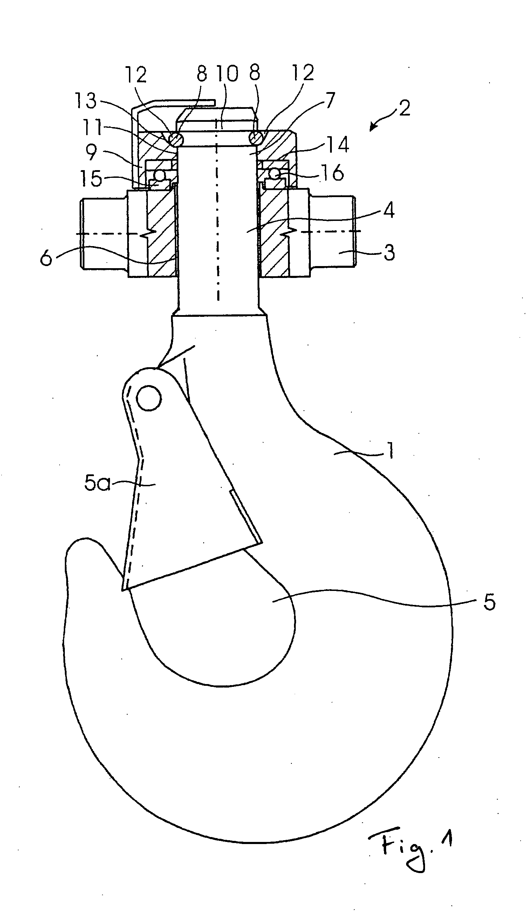

Die Figur 1 zeigt ein als Lasthaken 1 ausgebildetes Lastanschlagmittel mit einer Aufhängung 2, über die der Lasthaken 1 an einem Halteelement 3 abgestützt ist. Das Lastanschlagmittel kann auch als Lastöse ausgebildet werden.

Der Lasthaken 1 weist in üblicher Weise einen Schaft 4 und ein Hakenmaul 5 auf. Der Schaft 4 ist an dem dem Hakenmaul 5 abgewandten Ende des Lasthakens 1 angeordnet. Das Hakenmaul 5 ist mit einem um eine horizontale Achse schwenkbaren Sicherungsblech 5a verschließbar, das in Schließrichtung von einer nicht dargestellten Feder vorgespannt ist.

Das Halteelement 3 ist im vorliegenden Ausführungsbeispiel als achsenförmige Traverse ausgebildet, die beidendig um eine horizontale Achse schwenkbar in der nicht dargestellten Unterflasche gelagert werden kann. In der Mitte des Halteelements 3 ist eine Durchgangsöffnung 6 angeordnet, die in der Einbaulage des Halteelements 3 in der Unterflasche im Wesentlichen vertikal ausgerichtet. Bei dem als Traverse ausgebildeten Halteelement 3 ist somit die Durchgangsöffnung 6 rechtwinklig zur Längsachse der Traverse ausgerichtet. In der Draufsicht sieht die Traverse somit wie eine Öse mit zwei gegenüberliegenden Achsstummeln aus.

Der Schaft 4 wird bei der Montage des Lasthakens 1 von unten in die Durchgangsöffnung 6 zunächst hinein und dann hindurch gesteckt. Entsprechend den Außenabmessungen des Schaftes 4 ist die Durchgangsöffnung 6 als zylindrische Bohrung ausgebildet ist. Das obere und freie Schaftende 7 ragt aus der Durchgangsöffnung 6 des Halteelements 3 nach oben heraus. Am Schaftende 7 ist eine Ausnehmung 10 eingearbeitet, die dazu dient, nachdem das Schaftende 7 aus der Durchgangsöffnung 6 hinausragt einen handelsüblichen Sprengring 8 in Form eines Federstahlrunddrahts aufzunehmen. Über den dann mit seiner Innenseite und den angrenzenden Seitenbereichen in der Ausnehmung 10 ruhenden Sprengring 8 stützt sich der Lasthaken 1 auf einem ringförmigen Abstützelement 9 ab. Entsprechend wird der Sprengring 8 mit seiner Außenseite und überwiegend mit seiner angrenzenden unteren Seitenfläche auf dem Abstützelement 9 abgetragen.

Wie Figur 1 zeigt, ist das ringförmige Abstützelement 9 zum Hindurchstecken des Schaftendes 7 mit einer Durchgangsbohrung 11 versehen. Auf der dem Sprengring 8 zugewandten oberen Seite des Abstützelements 9 befindet sich an dessem inneren Rand eine ringförmige Vertiefung 12, welche eine im Wesentlichen konische Form aufweist. Im Detail besteht diese Vertiefung 12 - im Querschnitt und ausgehend von der Durchgangsbohrung 11 gesehen - aus einem Kreisbogen in der Länge etwa eines Sechstelkreises, der tangential dann in eine Gerade über geht, die dann den konisch sich erweiternden Teil der Vertiefung 12 bildet. Im Einbauzustand ruht der Sprengring 8 mit seiner Unterseite auf einer von der Vertiefung 12 gebildeten Anlagefläche 13, die im Wesentlichen von dem zuvor beschriebenen Kreisbogen gebildet wird.

An der unteren und somit der dem Hakenmaul 5 zugewandten Seite befindet sich am Abstützelement 9 eine plane Fläche 14, die rechtwinklig zur Längsachse des Schaftes 7 ausgerichtet ist. Über diese Fläche 14 wird das Abstützelement 9 auf einem Axialkugellager 15 abgestützt, welches sich auf seiner gegenüberliegenden Seite an dem Halteelment 3 im Bereich der Durchgangsöffnung 6 abstützt. Über das Axialkugellager 15 ist der Lasthaken 1 frei drehbar um seine Längsachse beziehungsweise der Längsachse des Schafts 4 gelagert.

Selbstverständlich kann das Abstützelement 9 auch selbst eine Kugellaufbahn für die Kugeln 16 des Kugellagers 15 aufweisen und somit eine der beiden Kugellagerlaufringe bilden.

Es ist auch möglich, dass der Sprengring 8 sich unter Auslassung des Abstützelements 9 und des Axialkugellagers 15 direkt auf dem Haltelement 3 oder unter Auslassung des Axialkugellagers 15 auf dem Abstützelement 9 abstützt. Die Drehbarkeit des Lasthakens 1 um seine vertikale Längsachse wird bei diesen Lösungen dann eingeschränkt.

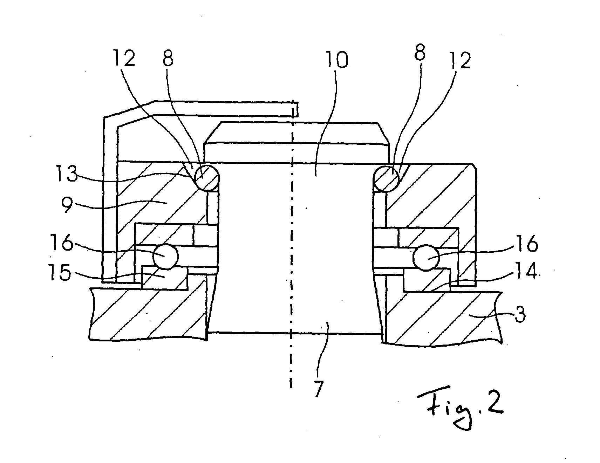

In der Figur 2 ist eine alternative Ausführung des Schafts 4 des Lasthakens 1 gezeigt, bei der der Sprengring 8 nur einseitig an seiner oberen Hälfte an der Ausnehmung 10 anliegt. Die Ausnehmung 10 ist etwa halbkreisförmig ausgebildet und geht - in Längsrichtung des Schaftes 4 und zum Hakenmaul 5 gesehen - tangential in einen geraden und somit zylindrischen Bereich des Schafts 4 über, der sich im Bereich des Axialkugellagers 15 unter einem Winkel von etwa 15° wieder auf den ursprünglichen Durchmesser des Schafts 4 erweitert. Hierdurch können erfolgreich, die im Schaft 4 auftretende Kerbspannungen verringern werden. Der Radius der halbkreisförmigen Bereich der Ausnehmung 10 ist an den Außendurchmesser des Sprengringes 8 angepasst.

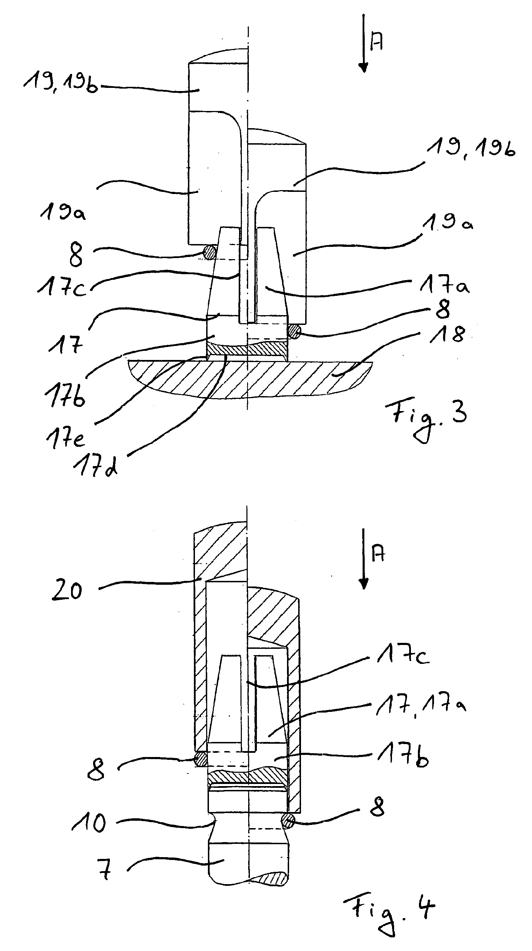

An Hand der Figuren 3 und 4 wird nachfolgend der Montagevorgang des Sprengringes 8 mittels der dafür entwickelten Werkzeuge näher erläutert.

In der Figur 3 ist eine Ansicht eines ersten Teils des Montagewerkzeuge zur Befestigung des Sprengringes der erfindungsgemäßen Aufhängung 2 dargestellt. Für die Montage ist in einem ersten Arbeitsschritt der Sprengring 8 auf das Maß des Außendurchmessers des Schaftes 4 beziehungsweise Schaftendes 7 aufzuweiten. Hierfür ist ein konusförmiges Werkzeug 17 vorgesehen, dass einen Konusbereich 17a und einen sich hieran anschließenden Zylinderbereich 17b aufweist. Der Außendurchmesser des Zylinderbereich 17b entspricht dem Außendurchmesser des Schaftes 4 beziehungsweise Schaftendes 7. Der an den Zylinderbereich 17b nach oben angrenzende Konusbereich 17a verjüngt sich auf einen Außendurchmesser, der deutlich geringer ist als der Innendurchmesser der Sprengringes 8. Für den ersten Arbeitsschritt wird das Werkzeug aufrecht mit dem Zylinderbereich 17b auf eine Unterlage 18 gestellt und ein Sprengring 8 von oben auf den Konusbereich 17a aufgeschoben. Anschließend wird der Sprengring 8 von einem Treibwerkzeug 19 von dem Konusbereich 17a bis in den Zylinderbereich 17b getrieben und hierbei entsprechend aufgeweitet. Um dies zu erreichen, weist das Treibwerkzeug 19 und auch das Werkzeug 17 eine spezielle Ausbildung auf.

Das Werkzeug 17 ist ausgehend von dem Ende des Konusbereiches 17a bis leicht in den Zylinderbereich 17b hinein mit von oben auf den Konusbereich 17a gesehen kreuzförmigen Einschnitten 17c versehen. Diese Einschnitte 17c dienen einerseits dazu, das Treibwerkzeug 19 in Auftreibrichtung A zu führen und andererseits Raum für entsprechend an dem Treibwerkzeug 19 kreuzförmige Treibelemente 19a zu schaffen.

Das Treibwerkzeug 19 besteht im Wesentlichen aus einem scheibenförmigen Treibkopf 19b, an den sich die als kreuzförmig zueinander angeordnete und ausgebildete Treibelemente 19a in Form von Wandabschnitten anschließen. Somit kann nachdem der Sprengring 8 auf den Konusbereich 17a aufgeschoben worden ist, das Treibwerkzeug 19 auf den Konusbereich 17a des Werkzeuges 17 aufgesetzt werden. Hierbei gleiten die Treibelemente 19a in die Einschnitte 17c des Werkzeuges 17. Die dem Treibkopf 19b abgewandten Treibflächen 19c des Treibwerkzeuges 19 geraten dabei in Anlage mit dem Sprengring 8. Da die Treibflächen 19c entsprechend der kreuzförmigen Ausgestaltung der Treibelemente 19a sich innerhalb der Einschnitte 17c quer zur Auftreibrichtung A erstrecken, können die vorzugsweise über einen Hammer auf den Treibkopf 19b des Treibwerkzeuges 19 in Auftreibrichtung A aufgebrachten Auftreibkräfte auch während der Durchmesseränderung des Sprengringes 8 beim Aufweiten sicher auf den Sprengring 8 übertragen werden.

Der Aufweitvorgang ist beendet, wenn der Sprengring 8 den Zylinderbereich 17b des Werkzeuges 17 erreicht hat und somit auf das Maß des Außendurchmessers des Zylinderbereichs 17b und auch des Schaftes 7 beziehungsweise des Schaftendes 7 aufgeweitet ist. Das Erreichen dieser Endposition wird erleichtert und auch ein Runterrutschen des Sprengringes 8 von dem Zylinderbereich 17b wird vermieden, dadurch dass wie zuvor beschrieben die Einschnitte 17c - in Auftreibrichtung A gesehen - am Anfang des Zylinderbereichs 17b enden. Wenn die Treibflächen 19d des Treibwerkzeuges 19 den Grund der Einschnitte 17c erreichen, ist automatisch auch der Auftreibvorgang beendet.

Der aufgeweitete und auf dem Zylinderbereich 17b des Werkzeuges 17 ruhende Sprengring 8 und das Werkzeug 17 können nun in einen weiteren Arbeitsschritt auf das Schaftende 7 aufgesetzt werde. Hierzu ist das Schaftende 7 in üblicher Weise angefast und das Werkzeug 17 an seinem Boden 17d, der dem Konusbereich 17a abgewandt ist, mit einem umlaufenden Vorsprung 17e an seinem Rand versehen. In der Figur 4, die ein weiteren Teils der Montagewerkzeuges in Form einer Treibhülse 20 zeigt, ist das Werkzeug 17 auf das Schaftende 7 aufgesetzt dargestellt.

Um nun in einem letzten Arbeitsschritt den Sprengring 8 von dem Zylinderbereich 17b des Werkzeuges 17 auf den Schaft 7 und in die dortige Ausnehmung 10 zu treiben, wird die Treibhülse 20 verwendet. Diese Treibhülse 20 besteht im Wesentlichen aus einem Hülsenkopf 20a, an den sich eine zylindrische Hülse 20b anschließt. Der Innendurchmesser der Hülse 20b ist geringfügig größer als der Außendurchmesser des Schaftendes 7 beziehungsweise Schaftes 5 und kann somit geführt von dem Zylinderbereich 17b des Werkzeugs 17 in Richtung des Schaftende 7, insbesondere durch Hämmerschläge auf den Hülsenkopf 20a, getrieben werden und hierbei mit seinen Treibflächen 20c den Sprengring 8 in Richtung der Ausnehmung 10 verschieben. Nachdem der Sprengring 8 die Ausnehmung 10 erreicht hat, werden die Treibhülse 20 und das Werkzeug 17 von dem Schaftende 7 entfernt.

### Bezugszeichenliste

- 1: Lasthaken
- 2: Aufhängung
- 3: Halteelement
- 4: Schaft
- 5: Hakenmaul
- 5a: Hakenmaulsicherung
- 6: Durchgangsöffnung
- 7: Schaftende
- 8: Sprengring
- 9: Abstützelement
- 10: Ausnehmung
- 11: Durchgangsbohrung
- 12: Vertiefung
- 13: Anlagefläche
- 14: Fläche
- 15: Axialkugellager
- 16: Kugel
- 17: Werkzeug
- 17a: Konusbereich
- 17b: Zylinderbereich
- 17c: Einschnitte
- 17d: Boden
- 17e: Vorsprung
- 18: Unterlage
- 19: Treibwerkzeug
- 19a: Treibelemente
- 19b: Treibkopf
- 19c: Treibfläche
- 20: Treibhülse
- 20a: Hülsenkopf
- 20b: Hülsenteil
- 20c: Treibfläche

- A: Auftreibrichtung

## Patentansprüche

1. Aufhängung (2) eines Lastanschlagmittels, insbesondere für Unterflaschen von Hebezeugen, mit einem mit einer Durchgangsöffnung (6) versehenen Halteelement (3), mit einem in die Durchgangsöffnung (6) einsteckbaren Schaft (4) des Lastanschlagmittels, dessen freies Schaftende (7) aus der Durchgangsöffnung (6) herausragt und mit einer Ausnehmung (10) versehen ist, in die ein Ring eingesetzt ist, über die sich das Lastanschlagmittel (1) an dem Halteelement (3) abstützt,
**dadurch gekennzeichnet,**
**dass** der Ring als einteiliger, offener und federnder Sprengring (8) ausgebildet ist.

2. Aufhängung nach Anspruch 1,
**dadurch gekennzeichnet, dass** der Sprengring (8) aus Federstahlrunddraht hergestellt ist.

3. Aufhängung nach Anspruch 1 oder 2,
**dadurch gekennzeichnet, dass** der Sprengring (8) innenseitig in der Ausnehmung (10) und außenseitig an einem Abstützelement (9) anliegt, das eine Vertiefung (12) mit einer Anlagefläche (13) zur Aufnahme des Sprengringes (8) aufweist.

4. Aufhängung nach Anspruch 3,
**dadurch gekennzeichnet, dass** das Abstützelement (9) ringförmig mit einer zentralen Durchgangsbohrung (11) ist, durch welche das Schaftende (7) hindurch verläuft, und eine plane Fläche (14) zur Anlage an einem Axialkugellager (15) aufweist, das an dem Halteelement (3) abgestützt ist.

5. Aufhängung nach Anspruch 4,
**dadurch gekennzeichnet, dass** das Abstützelement (9) eine Kugellaufbahn für Kugeln (16) aufweist und somit einen Kugellagerring bildet.

6. Aufhängung nach einem der Ansprüche 1 bis 5,
**dadurch gekennzeichnet, dass** die Ausnehmung (10) als umlaufende Nut mit einem halbkreisförmigen Querschnitt ausgebildet ist.

7. Aufhängung nach einem der Ansprüche 1 bis 5,
**dadurch gekennzeichnet, dass** die Ausnehmung (10) um das Schaftende (7) umlaufend ausgebildet ist und im Querschnitt gesehen an ihrem dem Ende des Schaftes (4) zugewandten Ende viertelkreisförmig ist und tangential in eine Gerade übergeht, die ansteigend im Bereich des Außenoberfläche endet.

8. Aufhängung nach einem der Ansprüche 1 bis 7,
**dadurch gekennzeichnet, dass** das Lastanschlagmittel als Lasthaken (1) oder Lastöse ausgebildet ist.

9. Aufhängung nach einem der Ansprüche 1 bis 8,
**dadurch gekennzeichnet, dass** das Halteelement (3) als Traverse ausgebildet ist, die in der Mitte die Durchgangsöffnung (6) trägt, an die sich gegenüberliegend zwei Achsstummel anschließen, über die das Haltelement (3) schwenkbar in einer Unterflasche gelagert ist.

10. Verfahren zur Montage des Ringes einer Aufhängung nach einem der Ansprüche 1 bis 9, wobei der Sprengring (8) zunächst mit einem konusförmigen Werkzeug (17) auf den Außendurchmesser des Schaftendes (7) aufgeweitet wird, anschließend das Werkzeug (17) auf das Schaftende (7) aufgesetzt wird und der Sprengring (8) von dem Werkzeug (17) mittels einer Treibhülse (20) auf das Schaftende (7) bis auf die Höhe der Ausnehmung (10) geschoben wird und der Sprengring (8) durch seine Vorspannung in Eingriff mit der Ausnehmung (10) kommt.

11. Montagewerkzeug zur Durchführung des Verfahrens nach Anspruch 10, bestehend aus einem konusförmigen Werkzeug (17) zum Aufweiten des Sprengringes (8) auf den Außendurchmesser des Schaftendes (7) mit einem Konusbereich (17a) und einem angrenzenden Zylinderbereich (17b), der einen dem Außendurchmesser des Schaftendes entsprechenden Außendurchmesser aufweist, aus einem Treibelement (19) zum Auftreiben des Sprengringes (8) über den Konusbereich (17a) und auf den Zylinderbereich (17b) und einer Treibhülse (20) zum Auftreiben des Sprengringes (8) von dem Zylinderbereich (17b) des in Verlängerung des Schaftes (4) an das Schaftende (7) angesetzten Werkzeuges (17) auf das Schaftende (7) und in die Ausnehmung (10) im Schaftende (7).

12. Montagewerkzeug nach Anspruch 11,
**dadurch gekennzeichnet, dass** das Werkzeug (17) in Aufweitrichtung (A) gesehen mit kreuzförmig angeordneten Einschnitten (17c) versehen ist, die durch den gesamten Konusbereich (17a) und bis in den Anfang des Zylinderbereichs (17b) reichen, das Treibwerkzeug (19) aus einem scheibenförmigen Treibkopf (19b) und angrenzenden Treibelementen (19a) besteht, die aus kreuzförmig zueinander angeordneten Wandabschnitten gebildet sind, deren Ausrichtung zueinander so gewählt ist, dass die Treibelemente (19a) in die Einschnitte (17c) in Auftreibrichtung (A) einführbar sind und somit der Sprengring (8) von den Treibelementen (19a) in Richtung des Zylinderbereiches (17b) treibbar ist.
